# EUROPÄISCHE PATENTSCHRIFT

(11) **EP 2 681 830 B1**
(45) Veröffentlichungstag und Bekanntmachung des Hinweises auf die Patenterteilung: **16.06.2021**
(21) Anmeldenummer: 12712235.6
(22) Anmeldetag: 13.03.2012
(51) Int. Cl.: H02K 9/18

(54) **ELEKTRISCHE MASCHINE**
ELECTRIC MACHINE
MACHINE ÉLECTRIQUE

(30) Priorität: 06.04.2011 DE 102011006844
(43) Veröffentlichungstag der Anmeldung: 08.01.2014
(73) Patentinhaber: Siemens Aktiengesellschaft, 80333 München (DE)
(72) Erfinder: NOACK, Felix, 90427 Nürnberg (DE); WEISS, Sebastian, 90522 Oberasbach (DE); WILLEMS, Patric, 92353 Postbauer-Heng (DE); ZWACK, Josef, 94060 Pocking (DE)
(86) Internationale Anmeldenummer: PCT/EP2012/054391
(87) Internationale Veröffentlichungsnummer: WO 2012/136453

(56) Entgegenhaltungen:
- EP-A1- 0 299 908
- DE-A1- 2 944 751
- JP-A- 10 174 369
- JP-A- 58 195 447

## Beschreibung

Die vorliegende Erfindung betrifft eine elektrische Maschine,
- wobei die elektrische Maschine ein Gehäuse aufweist, in dem ein Stator angeordnet ist und in dem ein Rotor um eine Rotationsachse drehbar gelagert ist,
- wobei das Gehäuse sich in Richtung der Rotationsachse gesehen von einem vorderen Ende zu einem hinteren Ende erstreckt,
- wobei das Gehäuse auf einer Oberseite in der Nähe des vorderen Endes eine vordere Lufteintrittsöffnung, in der Nähe des hinteren Endes eine hintere Lufteintrittsöffnung und dazwischen eine Luftaustrittsöffnung aufweist,
- wobei die elektrische Maschine ein vorderes und ein hinteres Luftförderelement aufweist, mittels derer im Betrieb der elektrischen Maschine Primärluft an der vorderen und der hinteren Lufteintrittsöffnung angesaugt und an der Luftaustrittsöffnung ausgestoßen wird,
- wobei auf die Oberseite des Gehäuses ein Aufsatzkühler aufgesetzt ist, der die vordere und die hintere Lufteintrittsöffnung und die Luftaustrittsöffnung mit Seitenwänden und einer Decke haubenartig überdeckt, so dass die an der Luftaustrittsöffnung ausgestoßene Primärluft wieder der vorderen und der hinteren Lufteintrittsöffnung zugeführt wird,
- wobei im Aufsatzkühler parallel zur Rotationsachse Rohre verlaufen, durch die hindurch Sekundärluft geführt wird,
- wobei die Primärluft durch die die Rohre durchströmende Sekundärluft gekühlt wird,
- wobei die Strömungsrichtung der Sekundärluft durch die Rohre einheitlich vom hinteren zum vorderen Ende gerichtet ist,
- wobei der Aufsatzkühler eine vordere und eine hintere Aufsatztrennwand umfasst,
- wobei die vordere Aufsatztrennwand zwischen der Luftaustrittsöffnung und der vorderen Lufteintrittsöffnung angeordnet ist, die hintere Aufsatztrennwand zwischen der Luftaustrittsöffnung und der hinteren Lufteintrittsöffnung angeordnet ist und die Aufsatztrennwände sich von der Oberseite des Gehäuses nach oben erstrecken, jedoch vor der Decke des Aufsatzkühlers enden,
- wobei zumindest im Aufsatzkühler Luftleitelemente angeordnet sind.

Eine derartige elektrische Maschine ist aus der JP 58 195 447 A bekannt.

Elektrische Maschinen mit Aufsatzkühler sind in verschiedenen Ausgestaltungen bekannt. Sie werden zum einen in Bezug auf den Weg der Primärluft, welche die elektrische Maschine durchströmt, in ein- und zweiflutige Maschinen eingeteilt. Einflutige elektrische Maschinen weisen in der Nähe des vorderen Endes eine Lufteintrittsöffnung und in der Nähe des hinteren Endes eine Luftaustrittsöffnung auf. Zweiflutige elektrische Maschinen weisen - wie obenstehend erläutert - in der Nähe des vorderen und des hinteren Endes je eine Lufteintrittsöffnung und dazwischen eine Luftaustrittsöffnung auf. Elektrische Maschinen mit Aufsatzkühler werden weiterhin in Bezug auf die Kühlung der Primärluft im Aufsatzkühler in elektrische Maschinen, bei denen die Primärluft mit Wasser gekühlt wird, und in elektrische Maschinen, bei denen die Primärluft mit Sekundärluft gekühlt wird, unterteilt. Die vorliegende Erfindung betrifft elektrische Maschinen mit Aufsatzkühler, bei denen die Primärluft mit Sekundärluft gekühlt wird.

Bei derartigen elektrischen Maschinen sind im Aufsatzkühler viele Rohre vorhanden, die parallel zur Rotationsachse verlaufen. Die Rohre sind nach außen hin offen. Die Rohre werden von der an der Luftaustrittsöffnung aus der elektrischen Maschine ausgestoßenen Luft (Primärluft) umströmt und nehmen dadurch die in der umströmenden Primärluft enthaltene Wärme auf. Dadurch kühlen sie die Primärluft, bevor die Primärluft wieder der elektrischen Maschine zugeführt wird. Die Rohre werden von der Sekundärluft durchströmt und dadurch gekühlt, die Sekundärluft somit erwärmt.

Die Strömungsrichtung der Sekundärluft ist parallel zur Rotationsachse, und zwar vom hinteren auf das vordere Ende der elektrischen Maschine zu. Aufgrund dieses Umstandes ist die Kühlleistung am hinteren Ende des Aufsatzkühlers, an dem die Sekundärluft in die Rohre eingeleitet wird, am größten. Am vorderen Ende ist die Kühlwirkung hingegen am kleinsten. Die der vorderen Lufteintrittsöffnung zugeführte Primärluft ist daher im Stand der Technik wärmer als die der hinteren Lufteintrittsöffnung zugeführte Primärluft. In der Praxis ergeben sich Temperaturunterschiede von ca. 20 Kelvin.

Die Temperaturunterschiede bei der der elektrischen Maschine über die vordere und die hintere Lufteintrittsöffnung zugeführten Primärluft führen dazu, dass die elektrische Maschine im vorderen Bereich schlechter gekühlt wird als im hinteren Bereich. Aufgrund dieses Umstands kann eine bauartbedingte Leistungsfähigkeit der elektrischen Maschine oftmals nicht vollständig ausgenutzt werden. Weiterhin ergibt sich eine reduzierte Lebensdauer der elektrischen Maschine. Die Faustregel lautet, dass 10 Kelvin Temperaturerhöhung eine um 50 % reduzierte Lebensdauer der elektrischen Maschine zur Folge haben.

Aus der EP 0 299 908 A1 ist eine elektrische Maschine mit einem geschlossenen Kühlkreislauf bekannt, wobei der Kühlkreislauf sich auf zwei Wärmetauscher verteilt, die beide auf der Oberseite oder der Unterseite der elektrischen Maschine angeordnet sind. Durch eine Anordnung von Leitflächen zwischen der Luftaustrittsöffnung und den Wärmetauschern wird erreicht, dass eine versetzte, jeweils halbseitige Sperrung von gegenüberliegenden Durchtrittsbereichen für die Kühlluft geschaffen wird, so dass Kühlluft unabhängig davon, an welcher Stelle in Axialrichtung der elektrischen Maschine gesehen sie aus der Luftaustrittsöffnung austritt, teilweise dem einen und teilweise dem anderen Wärmetauscher zugeführt wird. Ausgehend von den beiden Wärmetauschern wird die dann wieder gekühlte Luft jeweils einer der beiden Lufteintrittsöffnungen zugeführt.

Die Aufgabe der vorliegenden Erfindung besteht darin, eine elektrische Maschine zu schaffen, bei der die Temperaturunterschiede zwischen der der vorderen Lufteintrittsöffnung und der der hinteren Lufteintrittsöffnung zugeführten Luft zumindest reduziert, nach Möglichkeit sogar vollständig ausgeglichen werden.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 4.

Erfindungsgemäß ist bei einer elektrischen Maschine der eingangs genannten Art vorgesehen, dass - mittels der Luftleitelemente die am der vorderen Lufteintrittsöffnung zugewandten Bereich der Luftaustrittsöffnung ausgestoßene Primärluft der hinteren Lufteintrittsöffnung zugeführt wird und die am der hinteren Lufteintrittsöffnung zugewandten Bereich der Luftaustrittsöffnung ausgestoßene Primärluft der vorderen Lufteintrittsöffnung zugeführt wird.

Erfindungsgemäss weiter vorgesehen, dass die Luftleitelemente derart ausgebildet sind, dass sie zusammen mit den Aufsatztrennwänden zwei voneinander getrennte Strömungskanäle bilden, dass die im der vorderen Lufteintrittsöffnung zugewandten Bereich der Luftaustrittsöffnung aus der Luftaustrittsöffnung ausgestoßene Primärluft und die im der hinteren Lufteintrittsöffnung zugewandten Bereich der Luftaustrittsöffnung aus der Luftaustrittsöffnung ausgestoßene Primärluft in je einen der Strömungskanäle eingeblasen werden und dass die in die Strömungskanäle eingeblasene Luft mittels des jeweiligen Strömungskanals der jeweils anderen Lufteintrittsöffnung zugeführt wird. Die Strömungskanäle können sich insbesondere in Vertikalrichtung gesehen unterhalb der im Aufsatzkühler verlaufenden Rohre für Sekundärluft kreuzen.

Zur Realisierung der Strömungskanäle ist erfindungsgemäss vorgesehen
- dass die Luftleitelemente eine Quertrennwand umfassen,
- die Quertrennwand quer zur Rotationsachse verläuft und den der vorderen Lufteintrittsöffnung zugewandten Bereich der Luftaustrittsöffnung und den der hinteren Lufteintrittsöffnung zugewandten Bereich der Luftaustrittsöffnung voneinander trennt,
- dass die Luftleitelemente zwischen den Aufsatztrennwänden und der Quertrennwand je ein Trennelement umfassen,
- dass die Trennelemente sich in Richtung der Rotationsachse gesehen von der jeweiligen Aufsatztrennwand zur Quertrennwand und quer zur Rotationsachse gesehen von Seitenwand zu Seitenwand des Aufsatzkühlers erstrecken,
- dass die Trennelemente quer zur Rotationsachse gesehen von unten nach oben gegenläufig gestuft und/oder gerampt sind und
- dass die Quertrennwand in Vertikalrichtung gesehen zwischen den Trennelementen unterbrochen ist. ist es möglich,
- dass die Luftleitelemente eine im Gehäuse angeordnete Gehäusetrennwand umfassen,
- dass die Gehäusetrennwand derart angeordnet ist, dass sie die Luftaustrittsöffnung in einen ersten und einen zweiten Querschnittsbereich aufteilt,
- dass die über die vordere Lufteintrittsöffnung angesaugte Luft im ersten Querschnittsbereich der Luftaustrittsöffnung und die über die hintere Lufteintrittsöffnung angesaugte Luft im zweiten Querschnittsbereich der Luftaustrittsöffnung aus der Luftaustrittsöffnung ausgestoßen wird,
- dass der erste Querschnittsbereich der Luftaustrittsöffnung im der vorderen Lufteintrittsöffnung zugewandten Bereich der Luftaustrittsöffnung angeordnet ist und der zweite Querschnittsbereich der Luftaustrittsöffnung im der hinteren Lufteintrittsöffnung zugewandten Bereich der Luftaustrittsöffnung angeordnet ist und
- dass die Gehäusetrennwand im Bereich der Luftaustrittsöffnung im Wesentlichen quer zur Rotationsachse verläuft.

Durch diese Maßnahme wird erreicht, dass ein Vermischen der der elektrischen Maschine über die Lufteintrittsöffnungen zugeführten Primärluft innerhalb des Gehäuses vermieden wird. Die beiden Luftströme treten daher an definierten Stellen der Luftaustrittsöffnung in den Aufsatzkühler ein. Insbesondere wird erreicht, dass die der elektrischen Maschine über die vordere Lufteintrittsöffnung zugeführte Luft vollständig am der vorderen Lufteintrittsöffnung zugewandten Bereich der Luftaustrittsöffnung ausgestoßen wird. Analoges gilt in diesem Fall für die der elektrischen Maschine über die hintere Lufteintrittsöffnung zugeführte Luft.

Die zuletzt beschriebene Ausgestaltung kann insbesondere mit dem Vorhandensein der Quertrennwand kombiniert sein. In diesem Fall korrespondiert der Verlauf der Quertrennwand vorzugsweise mit dem Verlauf der Gehäusetrennwand.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine elektrische Maschine mit einem Aufsatzkühler,
- FIG 2: schematisch eine Draufsicht auf die elektrische Maschine von FIG 1,
- FIG 3: schematisch einen Schnitt durch den Aufsatzkühler von FIG 1,
- FIG 4: schematisch eine zu FIG 2 analoge Draufsicht auf eine erfindungsgemäß ausgestaltete elektrische Maschine,
- FIG 5: schematisch einen Schnitt analog zu FIG 1 durch einen erfindungsgemäßen Aufsatzkühler,
- FIG 6: schematisch einen Schnitt entlang einer Linie VIII-VIII in FIG 7,
- FIG 7: schematisch eine perspektivische Darstellung eines Teils des Aufsatzkühlers von FIG 7 und
- FIG 8 und 9: schematisch mögliche alternative Gestaltungen von Trennelementen.

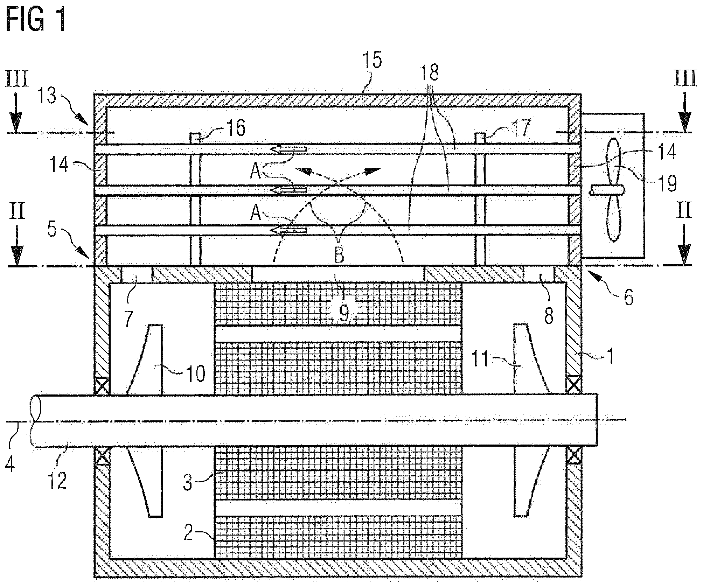

Gemäß den FIG 1 bis 3 weist eine elektrische Maschine ein Gehäuse 1 auf. In dem Gehäuse 1 ist ein Stator 2 angeordnet. In dem Gehäuse 1 ist weiterhin ein Rotor 3 gelagert. Der Rotor 3 ist um eine Rotationsachse 4 drehbar.

Das Gehäuse 1 erstreckt sich in Richtung der Rotationsachse 4 gesehen von einem vorderen Ende 5 zu einem hinteren Ende 6. Gemäß der Darstellung von FIG 1 handelt es sich bei dem vorderen Ende 5 des Gehäuses 1 um das antriebsseitige Ende der elektrischen Maschine, bei dem hinteren Ende 6 um das bedienseitige Ende der elektrischen Maschine. Dies ist jedoch nicht erfindungsrelevant. Es könnte ebenso umgekehrt sein.

Das Gehäuse 1 weist auf einer Oberseite eine vordere Lufteintrittsöffnung 7, eine hintere Lufteintrittsöffnung 8 und eine Luftaustrittsöffnung 9 auf. Die vordere Lufteintrittsöffnung ist in der Nähe des vorderen Endes 5 angeordnet, die hintere Lufteintrittsöffnung 8 in der Nähe des hinteren Endes 6. Die Luftaustrittsöffnung 9 ist zwischen den beiden Lufteintrittsöffnungen 7, 8 angeordnet.

Die elektrische Maschine weist ein vorderes Luftförderelement 10 und ein hinteres Luftförderelement 11 auf. Mittels des vorderen Luftförderelements 10 wird im Betrieb der elektrischen Maschine an der vorderen Lufteintrittsöffnung 8 Luft angesaugt, durch die elektrische Maschine geblasen und an der Luftaustrittsöffnung 9 ausgestoßen. In analoger Weise wird im Betrieb der elektrischen Maschine mittels des hinteren Luftförderelements 11 Luft an der hinteren Lufteintrittsöffnung 8 angesaugt und an der Luftaustrittsöffnung 9 ausgestoßen. Die Luftförderelemente 10, 11 sind in der Regel als Lüfter ausgebildet, die auf einer Rotorwelle 12, auf welcher der Rotor 3 drehfest angeordnet ist, ebenfalls drehfest angeordnet sind. Alternativ können die Luftförderelemente 10, 11 durch den Rotor 3 selbst realisiert sein.

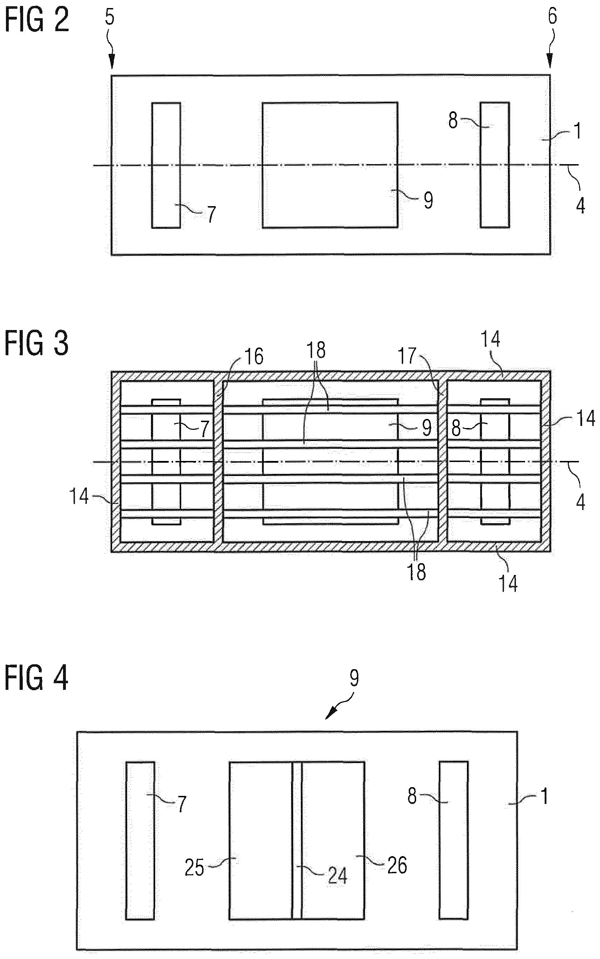

Auf die Oberseite des Gehäuses 1 ist ein Aufsatzkühler 13 aufgesetzt. Der Aufsatzkühler 13 weist gemäß den FIG 1 und 3 Seitenwände 14 und eine Decke 15 auf. Der Aufsatzkühler 13 überdeckt die vordere und die hintere Lufteintrittsöffnung 7, 8 und die Luftaustrittsöffnung 9 haubenartig. Die an der Luftaustrittsöffnung 9 ausgestoßene Luft wird daher wieder der vorderen und der hinteren Lufteintrittsöffnung 7, 8 zugeführt.

Der Aufsatzkühler 13 weist - siehe besonders deutlich FIG 1 - eine vordere und eine hintere Aufsatztrennwand 16, 17 auf. Die Aufsatztrennwände 16, 17 sind gemäß den FIG 1 und 3 zwischen der Luftaustrittsöffnung 9 und der vorderen Lufteintrittsöffnung 7 einerseits und der Luftaustrittsöffnung 9 und der hinteren Lufteintrittsöffnung 8 andererseits angeordnet. Sie erstrecken sich von der Oberseite des Gehäuses 1 nach oben. Die aus der Luftaustrittsöffnung 9 ausgestoßene Luft muss daher zwischen den beiden Aufsatztrennwänden 16, 17 zunächst nach oben steigen, bevor sie über die Aufsatztrennwände 16, 17 hinweg wieder nach unten zu den Lufteintrittsöffnungen 7, 8 strömen kann.

Im Aufsatzkühler 13 verlaufen weiterhin Rohre 18. Durch die Rohre 18 wird, wie in FIG 1 durch Pfeile A angedeutet, Sekundärluft geleitet. Beispielsweise kann zu diesem Zweck ein entsprechendes Lüfterelement 19 vorhanden sein.

Aufgrund der Strömungsrichtung der Sekundärluft - die im vorliegenden Fall vom hinteren zum vorderen Ende 6, 5 gerichtet ist - ist die Kühlwirkung der Sekundärluft in der Nähe des hinteren Endes 6 größer als in der Nähe des vorderen Endes 5. Im Stand der Technik resultieren hieraus Temperaturunterschiede zwischen der der elektrischen Maschine über die vordere Lufteintrittsöffnung 7 zugeführten Primärluft und der der elektrischen Maschine über die hintere Lufteintrittsöffnung 8 zugeführten Primärluft von ca. 20 Kelvin. Zum Reduzieren und nach Möglichkeit vollständigen Kompensieren dieser Temperaturunterschiede sind erfindungsgemäß im Gehäuse 1 und/oder im Aufsatzkühler 13 Luftleitelemente 24, 27 bis 29 angeordnet. Mittels der Luftleitelemente 24, 27 bis 29 wird - siehe die entsprechenden gestrichelten Pfeile B in FIG 1 - eine Kreuzung der Luftströme bewirkt. Die Luft, die am der vorderen Lufteintrittsöffnung 7 zugewandten Bereich der Luftaustrittsöffnung 9 ausgestoßen wird, wird daher zumindest teilweise der hinteren Lufteintrittsöffnung 8 zugeführt. In analoger Weise wird die Luft, die am der hinteren Lufteintrittsöffnung 8 zugewandten Bereich der Luftaustrittsöffnung 9 ausgestoßen wird, zumindest teilweise der vorderen Lufteintrittsöffnung 7 zugeführt. Wie dies erreicht wird und wie die entsprechenden Luftleitelemente ausgestaltet sein können, wird nachfolgend in Verbindung mit den FIG 4 bis 9, in denen der besseren Übersicht wegen die Rohre 18 ganz oder teilweise nicht mit dargestellt sind, näher erläutert.

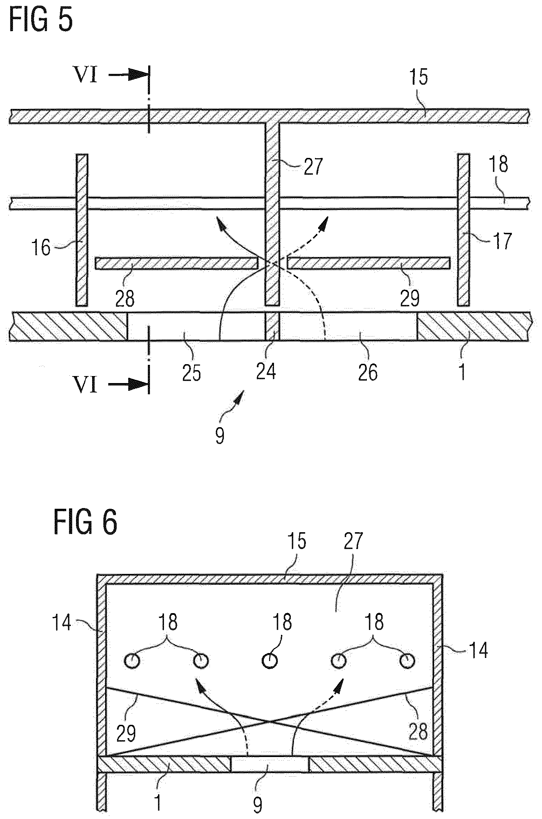

In einer Ausgestaltung umfassen die Luftleitelemente gemäß FIG 4 eine Gehäusetrennwand 24. Die Gehäusetrennwand 24 ist, wie bereits der Name sagt, im Gehäuse 1 der elektrischen Maschine angeordnet. Diese Ausgestaltung ist in Kombination mit den Ausgestaltungen der FIG 5 bis 9 realisierbar.

Die Gehäusetrennwand 24 ist derart angeordnet, dass sie die Luftaustrittsöffnung 9 in einen ersten und einen zweiten Querschnittsbereich 25, 26 aufteilt. Die über die vordere Lufteintrittsöffnung 7 angesaugte Luft wird im ersten Querschnittsbereich 25 aus der Luftaustrittsöffnung 9 ausgestoßen. In analoger Weise wird die über die hintere Lufteintrittsöffnung 8 angesaugte Luft im zweiten Querschnittsbereich 26 aus der Luftaustrittsöffnung 9 ausgestoßen.

Bei der Ausgestaltung gemäß FIG 4 verläuft die Gehäusetrennwand 24 im Bereich der Luftaustrittsöffnung 9 im Wesentlichen quer zur Rotationsachse 4. Der erste Querschnittsbereich 25 ist daher vollständig im der vorderen Lufteintrittsöffnung 7 zugewandten Bereich der Luftaustrittsöffnung 9 angeordnet. In analoger Weise ist bei der Ausgestaltung der FIG 4 der zweite Querschnittsbereich 26 vollständig im der hinteren Lufteintrittsöffnung 8 zugewandten Bereich der Luftaustrittsöffnung 9 angeordnet.

Die FIG 5 bis 7 zeigen eine mögliche Ausgestaltung des Aufsatzkühlers 13. Gemäß den FIG 5 bis 7 sind die Luftleitelemente 27 bis 29 derart ausgebildet, dass sie zusammen mit den Aufsatztrennwänden 16, 17 zwei voneinander getrennte Strömungskanäle bilden. Die Luft, die der elektrischen Maschine über die vordere Lufteintrittsöffnung 7 zugeführt wird, wird im der vorderen Lufteintrittsöffnung 7 zugewandten Bereich 25 der Luftaustrittsöffnung 9 aus der Luftaustrittsöffnung 9 ausgestoßen. Die Luft, die der elektrischen Maschine über die hintere Lufteintrittsöffnung 8 zugeführt wird, wird im der hinteren Lufteintrittsöffnung 8 zugewandten Bereich 26 der Luftaustrittsöffnung 9 aus der Luftaustrittsöffnung 9 ausgestoßen. Dies gilt ganz besonders, wenn im Gehäuse 1 entsprechend der Darstellung von FIG 5 die Gehäusetrennwand 24 vorhanden ist.

Die im jeweiligen Bereich 25, 26 aus der Luftaustrittsöffnung 9 ausgestoßene Luft wird gemäß den FIG 5 bis 7 in je einen der Strömungskanäle eingeblasen. Die in die Strömungskanäle eingeblasene Luft - in den FIG 5 bis 7 durch entsprechende, teilweise gestrichelte Pfeile dargestellt - wird mittels des jeweiligen Strömungskanals der jeweils anderen Lufteintrittsöffnung 8, 7 zugeführt.

Um die Luft der jeweils anderen Lufteintrittsöffnung 8, 7 zuführen zu können, müssen sich die Strömungskanäle kreuzen. Es ist prinzipiell frei wählbar, auf welcher Höhe sich die Strömungskanäle kreuzen. Vorzugsweise kreuzen sich die Strömungskanäle im Aufsatzkühler 13 unterhalb der Rohre 18. Um dies zu verdeutlichen, ist in FIG 6 die unterste Reihe von Rohren 18 mit eingezeichnet. Diese Ausgestaltung weist insbesondere den Vorteil auf, dass die Luftkreuzung mittels eines separaten Bauteils bewirkt werden kann, das zwischen der elektrischen Maschine und dem Aufsatzkühler 13 angeordnet ist.

Zur Realisierung der Strömungskanäle können die Luftleitelemente 27 bis 29 eine Quertrennwand 27 und zwei Trennelemente 28, 29 umfassen.

Die Quertrennwand 27 verläuft quer zur Rotationsachse 4. Sie trennt den der vorderen Lufteintrittsöffnung 7 zugewandten Bereich 25 der Luftaustrittsöffnung 9 und den der hinteren Lufteintrittsöffnung 8 zugewandten Bereich 26 der Luftaustrittsöffnung 9 voneinander. In dem Fall, dass im Gehäuse 1 der elektrischen Maschine die Gehäusetrennwand 24 vorhanden ist und diese quer zur Rotationsachse 4 verläuft, korrespondiert der Verlauf der Quertrennwand 27 mit dem Verlauf der Gehäusetrennwand 24. Ein etwaiger Abstand der Quertrennwand 27 von der Gehäusetrennwand 24 sollte möglichst klein (oder 0) sein.

Das Trennelement 28 (vorderes Trennelement 28) ist zwischen der vorderen Aufsatztrennwand 16 und der Quertrennwand 27 angeordnet. Das Trennelement 29 (hinteres Trennelement 29) ist zwischen der hinteren Aufsatztrennwand 17 und der Quertrennwand 27 angeordnet. In Richtung der Rotationsachse 4 gesehen erstrecken sich die Trennelemente 28, 29 von der jeweiligen Aufsatztrennwand 16, 17 zur Quertrennwand 27. Etwaige Abstände der Trennelemente 28, 29 zu den Aufsatztrennwänden 16, 17 und zur Quertrennwand 27 sollten möglichst klein (oder 0) sein. Quer zur Rotationsachse 4 gesehen erstrecken sich die Trennelemente 28, 29 von Seitenwand 14 zu Seitenwand 14 des Aufsatzkühlers 13. Etwaige Abstände der Trennelemente 28, 29 zu den Seitenwänden 14 des Aufsatzkühlers 13 sollten möglichst klein (oder 0) sein.

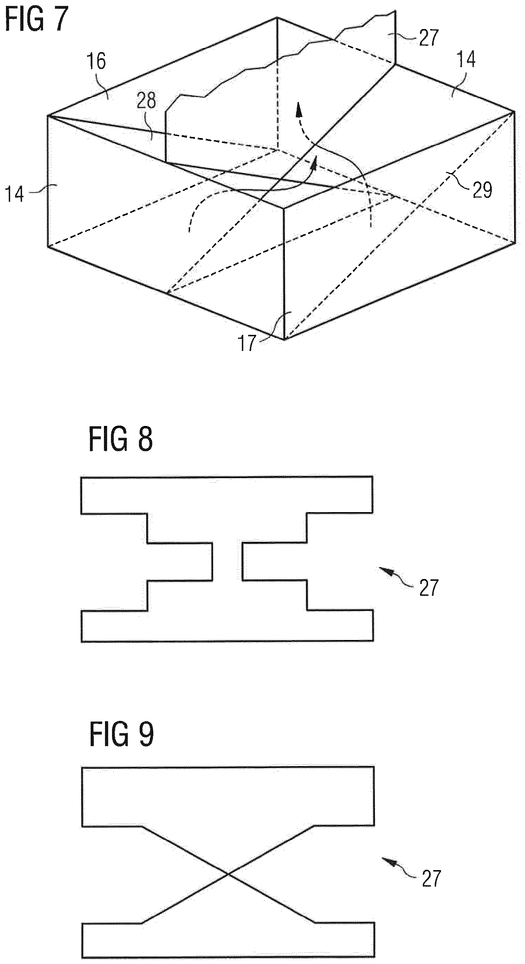

Die Trennelemente 28, 29 sind gemäß den FIG 6 und 7 quer zur Rotationsachse 4 gesehen von unten nach oben gegenläufig gerampt. Alternativ könnten die Trennelemente 28, 29 - siehe FIG 8 - gestuft oder - siehe FIG 9 - gemischt gestuft und gerampt sein.

Die Quertrennwand 27 ist in Vertikalrichtung gesehen in den Bereichen, in denen sie sowohl oberhalb des vorderen Trennelements 28 als auch oberhalb des hinteren Trennelements 29 verläuft, geschlossen. Ebenso ist die Quertrennwand 27 in Vertikalrichtung gesehen in den Bereichen geschlossen, in denen sie sowohl unterhalb des vorderen Trennelements 28 als auch unterhalb des hinteren Trennelements 29 verläuft. In dem Bereich, der in Vertikalrichtung gesehen zwischen den beiden Trennelementen 28, 29 liegt, ist die Quertrennwand 27 unterbrochen. Dadurch kann die Luft, die aus den Bereichen 25, 26 aus der Luftaustrittsöffnung 9 austritt, in diesem Höhenbereich auf die jeweils andere Seite wechseln.

Die vorliegende Erfindung weist viele Vorteile auf. Insbesondere ergibt sich bei relativ einfachem Aufbau eine deutliche Reduzierung, in manchen Fällen sogar eine nahezu vollständige Eliminierung der Temperaturunterschiede zwischen dem vorderen und dem hinteren Ende 5, 6 der elektrischen Maschine.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Elektrische Maschine,
- wobei die elektrische Maschine ein Gehäuse (1) aufweist, in dem ein Stator (2) angeordnet ist und in dem ein Rotor (3) um eine Rotationsachse (4) drehbar gelagert ist,
- wobei das Gehäuse (1) sich in Richtung der Rotationsachse (4) gesehen von einem vorderen Ende (5) zu einem hinteren Ende (6) erstreckt,
- wobei das Gehäuse (1) auf einer Oberseite in der Nähe des vorderen Endes (5) eine vordere Lufteintrittsöffnung (7), in der Nähe des hinteren Endes (6) eine hintere Lufteintrittsöffnung (8) und dazwischen eine Luftaustrittsöffnung (9) aufweist,
- wobei die elektrische Maschine ein vorderes und ein hinteres Luftförderelement (10,11) aufweist, mittels derer im Betrieb der elektrischen Maschine Primärluft an der vorderen und der hinteren Lufteintrittsöffnung (7,8) angesaugt und an der Luftaustrittsöffnung (9) ausgestoßen wird,
- wobei auf die Oberseite des Gehäuses (1) ein Aufsatzkühler (13) aufgesetzt ist, der die vordere und die hintere Lufteintrittsöffnung (7,8) und die Luftaustrittsöffnung (9) mit Seitenwänden (14) und einer Decke (15) haubenartig überdeckt, so dass die an der Luftaustrittsöffnung (9) ausgestoßene Primärluft wieder der vorderen und der hinteren Luft-ieintrittsöffnung (7,8) zugeführt wird,
- wobei im Aufsatzkühler (13) parallel zur Rotationsachse (4) Rohre (18) verlaufen, durch die hindurch Sekundärluft geführt wird,
- wobei die Primärluft durch die die Rohre (18) durchströmende Sekundärluft gekühlt wird,
- wobei die Strömungsrichtung der Sekundärluft durch die Rohre (18) einheitlich vom hinteren zum vorderen Ende (6, 5) gerichtet ist,
- wobei der Aufsatzkühler (13) eine vordere und eine hintere Aufsatztrennwand (16,17) umfasst,
- wobei die vordere Aufsatztrennwand (16) zwischen der Luftaustrittsöffnung (9) und der vorderen Lufteintrittsöffnung (7) angeordnet ist, die hintere Aufsatztrennwand (17) zwischen der Luftaustrittsöffnung (9) und der hinteren Lufteintrittsöffnung (8) angeordnet ist und die Aufsatztrennwände (16, 17) sich von der Oberseite des Gehäuses (1) nach oben erstrecken, jedoch vor der Decke (15) des Aufsatzkühlers (13) enden,
- wobei zumindest im Aufsatzkühler (13) Luftleitelemente (22 bis 24, 27 bis 29) angeordnet sind,
**dadurch gekennzeichnet,**
- **dass** mittels der Luftleitelemente (22 bis 24, 27 bis 29) die am der vorderen Lufteintrittsöffnung (7) zugewandten Bereich der Luftaustrittsöffnung (9) ausgestoßene Primärluft der hinteren Lufteintrittsöffnung (8) zugeführt wird und die am der hinteren Lufteintrittsöffnung (8) zugewandten Bereich der Luftaustrittsöffnung (9) ausgestoßene Primärluft der vorderen Lufteintrittsöffnung (7) zugeführt wird,
- **dass** die Luftleitelemente (24, 27 bis 29) derart ausgebildet sind, dass sie zusammen mit den Aufsatztrennwänden (16,17) zwei voneinander getrennte Strömungskanäle bilden,
- **dass** die im der vorderen Lufteintrittsöffnung (7) zugewandten Bereich (25) der Luftaustrittsöffnung (9) aus der Luftaustrittsöffnung (9) ausgestoßene Primärluft und die im der hinteren Lufteintrittsöffnung (8) zugewandten Bereich (26) der Luftaustrittsöffnung (9) aus der Luftaustrittsöffnung (9) ausgestoßene Primärluft in je einen der Strömungskanäle eingeblasen werden,
- **dass** die in die Strömungskanäle eingeblasene Primärluft mittels des jeweiligen Strömungskanals der jeweils anderen Lufteintrittsöffnung (8,7) zugeführt wird,
- **dass** die Luftleitelemente (24, 27 bis 29) eine Quertrennwand (27) umfassen,
- **dass** die Quertrennwand (27) quer zur Rotationsachse (4) verläuft und den der vorderen Lufteintrittsöffnung (7) zugewandten Bereich (25) der Luftaustrittsöffnung (9) und den der hinteren Lufteintrittsöffnung (8) zugewandten Bereich (26) der Luftaustrittsöffnung (9) voneinander trennt,
- **dass** die Luftleitelemente (24, 27 bis 29) zwischen den Aufsatztrennwänden (16,17) und der Quertrennwand (27) je ein Trennelement (28,29) umfassen,
- **dass** die Trennelemente (28,29) sich in Richtung der Rotationsachse (4) gesehen von der jeweiligen Aufsatztrennwand (16,17) zur Quertrennwand (27) und quer zur Rotationsachse (4) gesehen von Seitenwand (14) zu Seitenwand (14) des Aufsatzkühlers (13) erstrecken,
- **dass** die Trennelemente (28,29) quer zur Rotationsachse (4) gesehen von unten nach oben gegenläufig gestuft und/oder gerampt sind und
- **dass** die Quertrennwand (27) in Vertikalrichtung gesehen zwischen den Trennelementen (28, 29) unterbrochen ist.

2. Elektrische Maschine nach Anspruch 1 **,dadurch gekennzeichnet , dass** die Strömungskanäle sich in Vertikalrichtung gesehen unterhalb der im Aufsatzkühler (13) verlaufenden Rohre (18) für Sekundärluft kreuzen.

3. Elektrische Maschine nach einem der obigen Ansprüche,
**dadurch gekennzeichnet,**
- **dass** die Luftleitelemente (24, 27 bis 29) eine im Gehäuse (1) angeordnete Gehäusetrennwand (24) umfassen,
- **dass** die Gehäusetrennwand (24) derart angeordnet ist, dass sie die Luftaustrittsöffnung (9) in einen ersten und einen zweiten Querschnittsbereich (25,26) aufteilt,
- **dass** die über die vordere Lufteintrittsöffnung (7) angesaugte Primärluft im ersten Querschnittsbereich (25) der Luftaustrittsöffnung (9) und die über die hintere Lufteintrittsöffnung (8) angesaugte Primärluft im zweiten Querschnittsbereich (26) der Luftaustrittsöffnung aus der Luftaustrittsöffnung (9) ausgestoßen wird,
- **dass** der erste Querschnittsbereich (25) der Luftaustrittsöffnung (9) im der vorderen Lufteintrittsöffnung (7) zugewandten Bereich der Luftaustrittsöffnung (9) angeordnet ist und der zweite Querschnittsbereich (26) der Luftaustrittsöffnung (9) im der hinteren Lufteintrittsöffnung (8) zugewandten Bereich der Luftaustrittsöffnung (9) angeordnet ist und
- **dass** die Gehäusetrennwand (24) im Bereich der Luftaustrittsöffnung (9) im Wesentlichen quer zur Rotationsachse (4) verläuft.

4. Elektrische Maschine nach Anspruch 3,
**dadurch gekennzeichnet , dass** der Verlauf der Quertrennwand (27) mit dem Verlauf der Gehäusetrennwand (24) korrespondiert.

## Claims

1. Electric machine,
- wherein the electric machine has a housing (1) in which a stator (2) is arranged and in which a rotor (3) is rotationally supported about an axis of rotation (4),
- wherein the housing (1) extends from a front end (5) to a rear end (6) when viewed in the direction of the axis of rotation (4),
- wherein on a top face the housing (1) has a front air inlet opening (7) in the vicinity of the front end (5), a rear air inlet opening (8) in the vicinity of the rear end (6), and an air outlet opening (9) therebetween,
- wherein the electric machine comprises a front and a rear air conveying element (10,11) by means of which primary air is drawn in at the front and rear air inlet openings (7,8) and discharged at the air outlet opening (9) during operation of the electric machine,
- wherein an auxiliary cooler (13) is mounted on the top face of the housing (1), which auxiliary cooler (13) covers the front and the rear air inlet openings (7,8) and the air outlet opening (9) with side walls (14) and a top cover (15) in a hood-like manner, such that the primary air discharged at the air outlet opening (9) is fed back to the front and the rear air inlet openings (7,8),
- wherein tubes (18), through which the secondary air is guided, run parallel to the axis of rotation (4) in the auxiliary cooler (13),
- wherein the primary air is cooled by the secondary air flowing through the tubes (18),
- wherein the direction of flow of the secondary air through the tubes (18) is uniformly directed from the rear to the front end (6, 5),
- wherein the auxiliary cooler (13) comprises a front and a rear auxiliary partition (16,17),
- wherein the front auxiliary partition (16) is arranged between the air outlet opening (9) and the front inlet opening (7), the rear auxiliary partition (17) is arranged between the air outlet opening (9) and the rear inlet opening (8), and the auxiliary partitions (16,17) extend upwards from the top face of the housing (1), but terminate before the top cover (15) of the auxiliary cooler (13),
- wherein air guiding elements (22 to 24, 27 to 29) are arranged at least in the auxiliary cooler (13),
**characterised in that**
- by means of the air guiding elements (22 to 24, 27 to 29) the primary air discharged at the region of the air outlet opening (9) facing the front air inlet opening (7) is fed to the rear air inlet opening (8), and the primary air discharged at the region of the air outlet opening (9) facing the rear air inlet opening (8) is fed to the front air inlet opening (7),
- the air guiding elements (24, 27 to 29) are designed such that together with the auxiliary partitions (16,17) they form two flow channels which are separate from one another,
- the primary air discharged from the air outlet opening (9) in the region (25) of the air outlet opening (9) facing the front air inlet opening (7) and the primary air discharged from the air outlet opening (9) in the region (26) of the air outlet opening (9) facing the rear air inlet opening (8) is in each case blown into one of the flow channels,
- the primary air blown into the flow channels is fed by means of the respective flow channel to the respective other air inlet opening (8,7),
- the air guiding elements (24, 27 to 29) comprise a transverse partition (27),
- the transverse partition (27) runs at right angles to the axis of rotation (4) and separates the region (25) of the air outlet opening (9) facing the front air inlet opening (7) and the region (26) of the air outlet opening (9) facing the rear air inlet opening (8) from one another,
- the air guiding elements (24, 27 to 29) between the auxiliary partitions (16,17) and the transverse partition (27) each comprise one separating element (28,29),
- when viewed in the direction of the axis of rotation (4) the separating elements (28,29) extend from the respective auxiliary partition (16,17) to the transverse partition (27) and when viewed at right angles to the axis of rotation (4) extend from side wall (14) to side wall (14) of the auxiliary cooler (13),
- when viewed at right angles to the axis of rotation (4) the separating elements (28,29) are stepped and/or ramped in opposite directions from bottom to top and
- when viewed in the vertical direction the transverse partition (27) is interrupted between the separating elements (28,29).

2. Electric machine according to claim 1,
**characterised in that** when viewed in the vertical direction the flow channels cross beneath tubes (18) for secondary air running in the auxiliary cooler (13).

3. Electric machine according to one of the above claims,
**characterised in that**
- the air guiding elements (24, 27 to 29) comprise a housing partition (24) arranged in the housing (1),
- the housing partition (24) is arranged such that it divides the air outlet opening (9) into a first and a second cross-sectional region (25,26),
- the primary air drawn in by way of the front air inlet opening (7) is discharged from the air outlet opening (9) in the first cross-sectional region (25) of the air outlet opening (9) and the primary air drawn in by way of the rear air inlet opening (8) is discharged from the air outlet opening (9) in the second cross-sectional region (26) of the air outlet opening,
- the first cross-sectional region (25) of the air outlet opening (9) is arranged in the region of the air outlet opening (9) facing the front air inlet opening (7) and the second cross-sectional region (26) of the air outlet opening (9) is arranged in the region of the air outlet opening (9) facing the rear air inlet opening (8),
- the housing partition (24) runs essentially at right angles to the axis of rotation (4) in the region of the air outlet opening (9).

4. Electric machine according to claim 3,
**characterised in that** the line of the transverse partition (27) corresponds to the line of the housing partition (24).

## Revendications

1. Machine électrique,
- dans laquelle la machine électrique a une carcasse (1), dans laquelle est disposé un stator (2) et dans laquelle un rotor (3) est monté tournant autour d'un axe (4) de rotation,
- dans laquelle la carcasse (1) s'étend, considéré dans la direction de l'axe (4) de rotation, d'une extrémité (5) plus en avant à une extrémité (6) plus en arrière,
- dans laquelle la carcasse (1) a sur un côté supérieur au voisinage de l'extrémité (5) la plus en avant, une ouïe (7) d'entrée d'air plus en avant, à proximité de l'extrémité (6) plus en arrière, une ouïe (8) d'entrée d'air plus en arrière et entre elles une ouïe (9) de sortie d'air,
- dans laquelle la machine électrique a un élément (10) plus en avant et un élément (11) plus en arrière pour véhiculer de l'air, au moyen duquel en fonctionnement de la machine électrique de l'air primaire est aspiré de l'ouïe (7) la plus en avant d'entrée d'air et de l'ouïe (8) la plus en arrière d'entrée d'air et est refoulé à l'ouïe (9) de sortie d'air,
- dans laquelle sur le côté supérieur de la carcasse (1) est posé un refroidisseur (13) à coiffe, qui recouvre, à la manière d'une hotte par des parois (14) latérales et un couvercle (15), l'ouïe (7) plus en avant d'entrée d'air et l'ouïe (8) plus en arrière d'entrée d'air et l'ouïe (9) de sortie d'air de manière à ce que l'air primaire refoulé vers l'ouïe (9) de sortie d'air soit renvoyé à l'ouïe (7) plus en avant d'entrée d'air et à l'ouïe (8) plus en arrière d'entrée d'air,
- dans laquelle dans le refroidisseur (13) à coiffe s'étendent parallèlement à l'axe (4) de rotation des tubes (18) dans lesquels passent de l'air secondaire,
- dans laquelle on refroidit l'air primaire par l'air secondaire passant dans les tubes (18),
- dans laquelle le sens d'écoulement de l'air secondaire dans les tubes (18) est dirigé de manière uniforme de l'extrémité (6) la plus en arrière à l'extrémité (5) la plus en avant,
- dans laquelle le refroidisseur (13) à coiffe comprend une cloison (16) de coiffe la plus en avant et une cloison (17) de coiffe la plus en arrière,
- dans laquelle la cloison (7) de coiffe la plus en avant est disposée entre l'ouïe (9) de sortie d'air et l'ouïe (7) la plus en avant d'entrée d'air, la cloison (17) de coiffe la plus en arrière est disposée entre l'ouïe (9) de sortie d'air et l'ouïe (8) la plus en arrière d'entrée d'air, et les cloisons (16, 17) de coiffe s'étendent du côté supérieur de la carcasse (1) vers le haut, mais en se terminant cependant avant le couvercle (5) du refroidisseur (13) à coiffe,
- dans laquelle des éléments (22 à 24, 27 à 29) de conduite d'air sont disposés au moins dans le refroidisseur (13) à coiffe, **caractérisée**
- **en ce que** au moyen des éléments (22 à 24, 27 à 29) de conduite d'air, on envoie à l'ouïe (8) la plus en arrière d'entrée d'air l'air primaire refoulé à la partie, tournée vers l'ouïe (7) la plus en avant d'entrée d'air, de l'ouïe (9) de sortie d'air et on envoie à l'ouïe (7) la plus en avant d'entrée d'air l'air primaire refoulé de la partie, tournée vers l'ouïe (8) la plus en avant d'entrée d'air, de l'ouïe (9) de sortie d'air,
- **en ce que** les éléments (24, 27 à 29) de conduite d'air sont constitués de manière à former ensemble avec les cloisons (16, 17) de coiffe deux conduits d'écoulement distincts l'un de l'autre,
- **en ce que** on insuffle dans respectivement l'un des conduits d'écoulement de l'air primaire refoulé de l'ouïe (9) de sortie d'air dans la partie (25), tournée vers l'ouïe (7) la plus en avant d'entrée d'air, de l'ouïe (9) de sortie d'air et l'air primaire refoulé de l'ouïe (9) de sortie d'air dans la partie (26), tournée vers l'ouïe (8) la plus en arrière d'entrée d'air, de l'ouïe (9) de sortie d'air,
- **en ce que** l'on envoie l'air primaire insufflé dans le conduit d'écoulement au moyen du conduit d'écoulement respectif à l'autre ouïe (8, 7) respective d'entrée d'air,
- **en ce que** les éléments (24, 27 à 29) de conduite d'air comprennent une cloison (27) transversale,
- **en ce que** la cloison (27) transversale s'étend transversalement à l'axe (4) de rotation et sépare l'une de l'autre la partie (25), tournée vers l'ouïe (7) la plus en avant d'entrée d'air, de l'ouïe (9) de sortie d'air et la partie (26), tournée vers l'ouïe (8) plus en arrière d'entrée d'air, de l'ouïe (9) de sortie d'air,
- **en ce que** les éléments (24, 27 à 29) de conduite d'air comprennent respectivement un élément (28, 29) de séparation entre les cloisons (16, 17) de coiffe et la cloison (27) transversale,
- **en ce que** les éléments (28, 29) de séparation s'étendent, considéré dans la direction de l'axe (4) de rotation, de la cloison (16, 17) respective de coiffe à la cloison (27) transversale et, considéré transversalement à l'axe (4) de rotation, de la paroi (14) latérale à la paroi (14) latérale du refroidisseur (13) à coiffe,
- **en ce que** les éléments (28, 29) de séparation sont étagés et/ou en rampe en sens contraire de bas en haut, considérés transversalement à l'axe (4) de rotation, et
- **en ce que** la cloison (27) transversale est, considéré dans la direction verticale, interrompue entre les éléments (28, 29) de séparation.

2. Machine électrique suivant la revendication 1,
**caractérisée**
**en ce que** les conduits d'écoulement se croisent, considéré dans la direction verticale, en dessous des tubes (18) pour l'air secondaire s'étendant dans le refroidisseur (13) à coiffe.

3. Machine électrique suivant l'une des revendications précédentes,
**caractérisée**
- **en ce que** les éléments (24, 27 à 29) de conduite d'air comprennent une cloison (24) de carcasse disposée dans la carcasse (1),
- **en ce que** la cloison (24) de carcasse est disposée de manière à subdiviser l'ouïe (9) de sortie d'air en une première et en une deuxième partie (25, 26) de section transversale,
- **en ce que** l'air primaire, aspiré par l'ouverture (7) la plus en avant d'entrée d'air, est refoulé de l'ouïe (9) de sortie d'air dans la première partie (25) de section transversale de l'ouïe (9) de sortie d'air et l'air primaire, aspiré par l'ouïe (8) la plus en arrière d'entrée d'air, est refoulé de l'ouïe (9) de sortie d'air dans la deuxième partie (26) de section transversale de l'ouïe de sortie d'air,
- **en ce que** la première partie (26) de section transversale de l'ouïe (9) de sortie d'air est disposée dans la partie, tournée vers l'ouïe (7) la plus en avant d'entrée d'air, de l'ouïe (9) de sortie d'air et la partie (26) de section transversale de l'ouïe (9) de sortie d'air est disposée dans la partie, tournée vers l'ouïe (8) la plus en arrière d'entrée d'air, de l'ouïe (9) de sortie d'air et
- **en ce que** la cloison (24) de carcasse s'étend sensiblement transversalement à l'axe (4) de rotation dans la partie de l'ouïe (9) de sortie d'air.

4. Machine électrique suivant la revendication 3,
**caractérisée en ce que** le tracé de la cloison (27) transversale correspond au tracé de la cloison (24) de la carcasse.
